# EUROPEAN PATENT SPECIFICATION

(11) **EP 1 063 463 B1**
(45) Date of publication and mention of the grant of the patent: **28.09.2005**
(21) Application number: 00304952.5
(22) Date of filing: 12.06.2000
(51) Int. Cl.: F16L 37/084

(54) **Releasable tube coupling devices**
Lösbare Rohrkupplung
Raccord de tuyaux détachable

(30) Priority: 10.06.1999 GB 9913476
(43) Date of publication of application: 27.12.2000
(73) Proprietor: IMI YORKSHIRE FITTINGS LIMITED, Leeds, LS1 1RD (GB)
(72) Inventor: Dowling, Martin John, Harrogate HG2 9NS (GB)
(74) Representative: Makovski, Priscilla Mary

(56) References cited:
- DE-C- 863 881
- FR-A- 2 689 205
- GB-A- 2 177 174
- GB-A- 2 274 889
- US-A- 3 140 107
- US-A- 3 633 944
- US-A- 4 082 326

## Description

This invention relates to releasable tube coupling devices and more particularly to releasable tube coupling devices of the type comprising a body housing annular sealing means, for example an O-ring, for effecting a fluid-tight seal with an inserted tube and an annular gripping element, commonly referred to in the art as a "grab ring", having a plurality of teeth that grip the inserted tube and prevent accidental withdrawal, or blow out, of the tube during service. Hereinafter, tube coupling devices of the aforementioned type are referred to as "of the type described", an example of which is our TECTITE (Registered Trade Mark) range of fittings. In order to release the tube, the body may, as in the case of the TECTITE fittings, also house a release sleeve which, when it is axially depressed, deforms the teeth of the grab ring out of contact with the external surface of the tube which, therefore, may then simply be pulled out.

Conventionally, the coupling is made simply by pushing the tube into the device, ie. no further operation is required. Accordingly, the O-ring and the grab ring, in the absence of an inserted tube, have internal diameters which are necessarily slightly smaller than the external diameter of the tube and are deformed by the tube as it is inserted.

It will be appreciated, therefore, that the O-ring and the grab ring present a resistance to insertion of the tube. With small-sized coupling devices (say for coupling tubes of 28mm OD or less), the resistance is sufficiently small that manual insertion of the tube is relatively easy. However, as the coupling size increases, coupling by hand, especially of a flexible plastics tube, becomes difficult and often impossible because of the excessive force required to push the tube past the grab ring and the O-ring. In any event, where the tube is metallic, such as of copper, the leading end can cause damage to the grab ring or, especially, to the O-ring during insertion of the tube. US 4 082 326 discloses a pipe coupling having a body that houses a retaining ring, a deformable sealing ring and a threaded clamping means. The clamping means deforms the retaining ring and sealing ring into contact with the pipe.

It is an object of the present invention to provide a releasable tube coupling device of the type described which overcomes the aforesaid problems.

According to the present invention, there is provided a tube coupling device of the type described in which the respective internal diameters of the sealing means and the gripping element are, prior to effecting the coupling with a tube, substantially equal to or greater than the external diameter of the tube for which said device is nominally adapted, the device further comprising clamping means movable axially relative to the body between an axially outer, tube insertion, position and an axially inner, tube coupling, position, and when the clamping means is in the tube coupling position, both the sealing means and the teeth of the gripping element are resiliently deformed into, respectively, sealing and gripping contact with the external surface of an inserted tube while permitting them to resile back to their tube insertion positions when the clamping means is moved to its axially outer position, characterised in that locking means are provided to prevent or inhibit loosening of the clamping means, when it is in its axially inner, tube coupling, position wherein the clamping means comprises a nut screw-threadedly engaged with the body having internally of the body, an annular face that, in its axially inner position, directly or indirectly loads the sealing means and the gripping element thereby deforming them into, respectively, sealing and gripping contact with the tube, whereby the nut may be moved between its axially outer and inner positions by rotating it, and wherein a detent is formed integrally with the nut and is adapted to engage in a recess formed in the end face of the body when the nut has been adequately tightened and thus the clamping means is in the tube coupling position.

It should be noted that the body of a tube coupling device of the type described usually includes an axially inner, cylindrical bore portion, usually adjacent to an annular tube stop, which snugly locates the inserted end portion of the tube and which, therefore, has a diameter only slightly greater than the external diameter of the tube. It is the diameter of this bore portion, when present, that dictates the tube OD for which any particular coupling device is "nominally adapted" and, accordingly, the internal diameters of the sealing means and of the grab ring will be substantially equal to or greater than the diameter of that bore portion. The device is provided with means to prevent loosening of the clamping means by, for example, vibrations to which the device might be subjected in service.

Preferably, the respective internal diameters of the sealing means and the grab ring are greater than the diameter of that bore portion so that, when the tube is inserted, they will be completely clear of it. However, light contact with the tube would in most cases be acceptable consistent with the operator being able to insert the tube easily and fully by hand without damaging the sealing means or the grab ring.

The clamping means may be rotated either manually or by using a tool such as a spanner. Conversely, the sealing and gripping contact of, respectively, the sealing means and the grab ring with the tube may be released by rotating the nut in the opposite direction into its axially outer position whereupon the sealing means and the grab ring resile back to their original, tube insertion, configurations and the tube may be pulled out.

As in known tube coupling devices of the type described, the sealing means is preferably located axially inwardly of the grab ring and the two are preferably separated by an annular spacer such as a washer. In that case, the clamping means, as it is progressively moved towards its axially inner position, abuts the grab ring and causes it, and the spacer, to slide in the body and progressively deform the sealing means into sealing engagement with an inserted tube. During that process, the teeth of the grab ring remain substantially undeformed. However, upon further movement of the clamping means, the teeth of the grab ring become deformed inwardly by engagement with the spacer, and grip the tube, thereby completing the coupling operation. To that end, it will be appreciated that the force required to deform the teeth of the grab ring into engagement with the tube needs to be greater than that required to deform the sealing means into adequate sealing contact with the tube.

However, the position of the grab ring and the sealing means may be reversed so that the former is positioned axially inwardly of the latter. In that case, the force required to deform the teeth of the grab ring into engagement with the tube is preferably, but not necessarily, lower than that required to deform the sealing means into adequate sealing contact with the tube.

A tube coupling device of the invention may be used to couple rigid (such as metallic), semi-rigid or flexible tubes in all sorts of applications but has special application to the plumbing field. The device may be used to couple together two or more tubes and, as such, may be in the form of, for example, a straight, elbow or T-connector. Alternatively, it may be part of a tap, valve, pump or other device to which a tube is to be connected.

Embodiments of the invention will now be described in more detail, by way of example only, with reference to the accompanying drawings in which:
Fig 1 is a side elevation, in section, of one end of a straight coupling device for connecting together two tubes,
Fig 2 is an end view of the grab ring used in the device of Fig 1,
Fig 3 is a side elevation, in section, of a slightly modified form of the device shown in Fig 1,
Fig 4 is a side elevation, in section, of one end of another form of coupling device for connecting together two tubes, and
Fig 5 is a side elevation of an end of the couplings shown in Figs 1, 3 and 4 illustrating means to lock the clamping nut in position once the tube coupling has been effected.

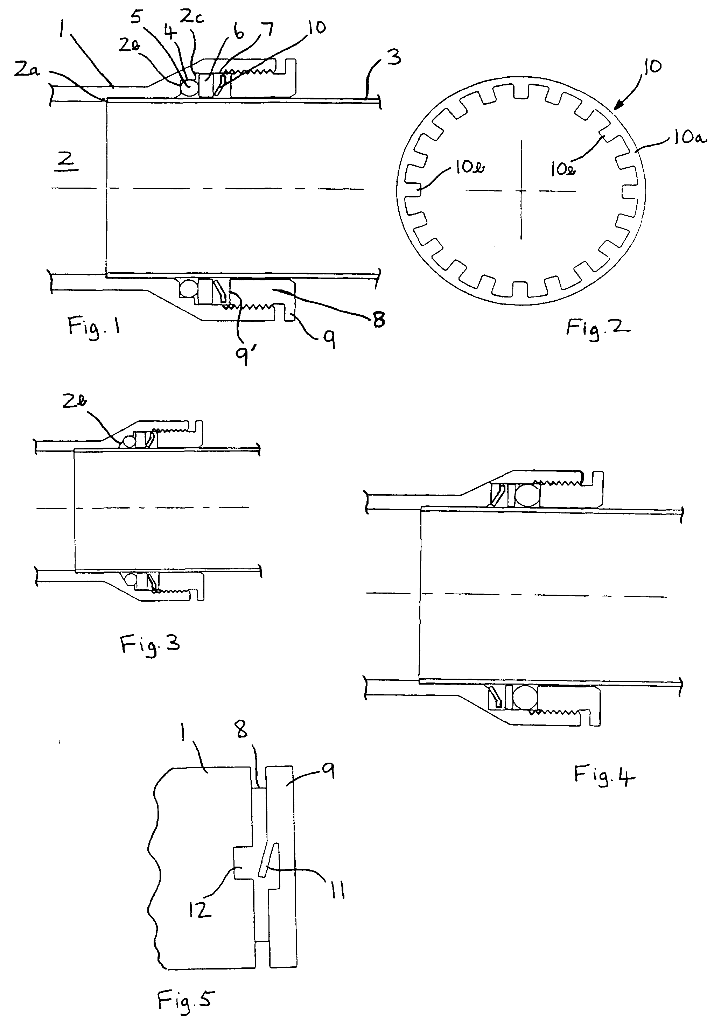

Referring first to Fig 1, this shows the right hand end, the left hand end being identical, of a straight coupler for connecting together two tubes of, say, copper. The coupler comprises a unitary body 1 having a bore 2 extending therethrough. The end portion of the bore 2 is stepped thereby providing a number of internal annular faces 2a, 2b and 2c.

The axially innermost face 2a serves as a tube stop which the end of the tube 3 abuts. A cylindrical section of the bore 2 between the faces 2a and 2b has a diameter fractionally greater than the external diameter of the tube 3 and snugly receives the end portion of the latter. The face 2b, together with a short cylindrical bore section 4, provides a seat for a rubber O-ring 5. The outermost face 2c provides an abutment for an annular washer 6 which can be displaced axially in a cylindrical bore section 7 which extends to the outer end of the body 1. The bore section 7, adjacent to the outer end of the body 1, is internally screw-threaded and engages an externally threaded annular nut 8 formed, externally of the body 1, with a flange 9. Intermediate the nut 8 and the washer 6 is a grab ring 10 which, like the washer 6, can be displaced axially in the cylindrical bore section 7.

Fig 2 is an end view of the grab ring 10 which, as is conventional, comprises a rim 10a having a plurality of integral, generally radially inwardly extending teeth 10b. As can be seen from Fig 1, the teeth 10b are slightly inclined away from the open, tube-insertion end of the bore 2. They could, however, be inclined in the opposite direction towards the open end of the bore. Typically, the grab ring will be made of stainless steel.

Fig 1 shows the position after the tube 3 has been inserted up to the tube stop 2a but before completing the coupling by tightening the nut 8. As can be seen, there is a small clearance between the external surface of the tube 3 and the internal surfaces of, respectively, the O-ring 5 and the grab ring 10. Accordingly, there is no resistance at all to insertion of the tube 3. The coupling is completed by rotating the nut 8 using a spanner which engages flats formed on the flange 9 of the nut so that the annular face 9' of the nut progressively moves axially inwardly.

During this operation, the face 9' of the nut 8 comes into abutment with the periphery 10a of the grab ring 10 which is progressively pushed along the bore 7. The teeth 10b of the grab ring 10, in abutting the washer 6, push the latter along the bore until it in turn comes into abutment with the face 2c, during which the O-ring 5 becomes compressed and, in particular, deforms radially inwardly into sealing contact with the tube 3. Accordingly, a fluid-tight seal is established between the cylindrical section 4 of the bore 2, the face 2b and the external surface of the tube 3. The force required to compress the O-ring 5 as aforesaid is less than that required to deform the teeth 10b to any significant extent and the relevant mechanical properties of the O-ring and the grab ring are selected to that end. Upon further tightening of the nut 8, however, with the washer 6 abutting the face 2c, the teeth 10b are caused to cantilever into biting engagement with the external surface of the tube 3 and the coupling is then complete and the tube 3 cannot be withdrawn.

Fig 3 (from which most of the reference numerals have been omitted) shows an embodiment that is very similar to that shown in Fig 1. However, the surface 2b is slightly tapered and this results in a reduction of the force necessary to obtain an adequate fluid-tight seal, other things being equal.

Fig 4 (from which the reference numerals have been omitted) illustrates a modification in which the relative positions of the O-ring 5 and the grab ring 10 are reversed. The mechanism by which the coupling is formed is similar to that described with reference to Fig 1, but here the force required to adequately compress the O-ring 5 is preferably greater than that required to adequately deform the teeth 10b of the grab ring so that the latter are caused to bite into the tube 3 before the O-ring 5 becomes deformed into sealing contact with the tube 3. However, this is not essential since the O-ring could, even if it were compressed before deformation of the grab ring teeth, conceivably roll along the bore 7 and over the surface of the tube 3 whereby the necessary axial load would then be applied to the grab ring via the washer 6.

Finally, Fig 5 illustrates a locking arrangement for the nut 8 which serves to prevent its loosening during service once the coupling has been made. This arrangement comprises a detent 11 formed integrally with the flange 9 of the nut 8 and adapted to engage in a recess 12 formed in the end face of the body 1 when the nut has been adequately tightened. Alternatively, and not within the scope of the invention, for example, a spring or serrated washer may be provided between the flange 9 and the end face of the body 1 or one and/or the other of the inner face of the flange 9 and the outer face of the body may be serrated or knurled.

Should it be desired to uncouple the tube 3 from the device, the nut 8 is simply unscrewed thereby permitting the grab ring 10 and the O-ring 5 to resile back to their original positions clear of the tube surface whereupon the tube 3 may be freely withdrawn.

## Claims

1. A releasable tube coupling device including a body (1) housing annular sealing means (5) for effecting a fluid-tight seal with an inserted tube (3) and a substantially annular gripping element (10) having a plurality of teeth (10b) that grip the inserted tube and prevent accidental withdrawal, or blow out, of the tube (3) during service, the respective internal diameters of the sealing means (5) and the gripping element (10) are, prior to effecting the coupling with a tube (3), substantially equal to or greater than the external diameter of the tube for which said device is nominally adapted, the device further comprising clamping means (8) movable axially relative to the body (1) between an axially outer, tube insertion, position and an axially inner, tube coupling, position, and when the clamping means is in the tube coupling position, both the sealing means (5) and the teeth (10b) of the gripping element (10) are resiliently deformed into, respectively, sealing and gripping contact with the external surface of the inserted tube (3) while permitting them to resile back to their tube insertion positions when the clamping means is moved to its axially outer position, wherein the clamping means (8) comprises a nut screw-threadedly engaged with the body (1) having internally of the body, an annular face (9) that, in its axially inner position, directly or indirectly loads the sealing means (5) and the gripping element (10) thereby deforming them into, respectively, sealing and gripping contact with the tube (3), whereby the nut may be moved between its axially outer and inner positions by rotating it, **characterised in that** locking means (11) are provided to prevent or inhibit loosening of the clamping means (8), when it is in its axially inner, tube coupling, position and wherein said locking means comprise a detent (11) formed integrally with the nut and adapted to engage in a recess (12) formed in the end face of the body (1) when the nut has been adequately tightened and thus the clamping means (8) is in the tube coupling position.

2. A tube coupling device according to claim 1 wherein the respective internal diameters of the sealing means (5) and the gripping element (10) are, when the clamping means (8) is in its outer position, greater than the external diameter of the tube (3) so that, when the tube is inserted, there is a clearance between them and the tube (3).

## Patentansprüche

1. Lösbare Rohrkupplung, die einen Körper (1) umfasst, der ein ringförmiges Dichtmittel (5) zur Bewirkung einer flüssigkeitsdichten Abdichtung mit einem eingeführten Rohr (3) und ein im Wesentlichen ringförmiges Greifelement (10) mit mehreren Zähnen (10b) aufnimmt, die die eingeführte Röhre greifen und unbeabsichtigtes Herausziehen oder Aufplatzen der Röhre (3) während der Wartung verhindern, wobei die jeweiligen Innendurchmesser des Dichtmittels (5) und des Greifelements (10) vor dem Erzielen der Kupplung mit einem Rohr (3) im Wesentlichen gleich oder größer als der Außendurchmesser des Rohrs sind, für welches die Kupplung nominell ausgelegt ist, wobei die Kupplung ferner ein Klemmmittel (8) umfasst, das axial relativ zum Körper (1) zwischen einer axial äußeren Rohreinführposition und einer axial inneren Rohrkupplungsposition bewegbar ist, und wobei, wenn das Klemmmittel sich in der Rohrkupplungsposition befindet, sowohl das Dichtelement (5) als auch die Zähne (10b) des Greifelements (10) federnd in Dicht- bzw. Greifkontakt mit der Außenfläche des eingeführten Rohrs (3) verbogen werden, wohingegen es ihnen ermöglicht wird, in ihre Rohreinführpositionen zurückzufedern, wenn das Klemmmittel in seine axial äußere Position bewegt wird, wobei das Klemmmittel (8) eine Mutter aufweist, die mittel Schraubgewinde mit dem Körper (1) in Eingriff steht und die im Innern des Körpers eine ringförmige Fläche (9) aufweist, die in ihrer axial inneren Stellung direkt oder indirekt das Dichtmittel (5) und das Greifelement (10) einspannt und dabei diese in Dicht- bzw. Greifkontakt mit dem Rohr (3) verbiegt, wobei die Mutter dadurch, dass sie gedreht wird, zwischen ihrer axial äußeren und inneren Position bewegt werden kann, die **dadurch gekennzeichnet ist, dass** Verriegelungsmittel (11) vorgesehen sind, um das Lösen des Klemmmittels (8) zu verhindern oder zu unterbinden, wenn sich dieses in seiner axial inneren Rohrkupplungsposition befindet, und wobei die genannten Verriegelungsmittel eine Sperrklinke (11) aufweisen, die einstückig mit der Mutter ausgebildet ist und die so ausgestaltet ist, dass sie in eine, in der Endfläche des Körpers (1) ausgebildete Ausnehmung (12) eingreift, wenn die Mutter ausreichend angezogen wurde, und somit befindet sich das Klemmmittel (8) in der Rohrkupplungsposition.

2. Lösbare Rohrkupplung gemäß Anspruch 1, wobei die jeweiligen Innendurchmesser des Dichtmittels (5) und des Greifelements (10), wenn das Klemmmittel (8) in seiner äußeren Position ist, größer als der Außendurchmesser des Rohrs (3) sind, so dass, wenn das Rohr eingeführt ist, ein Spiel zwischen ihnen und dem Rohr (3) vorhanden ist.

## Revendications

1. Dispositif d'accouplement de tube détachable comprenant un corps (1) logeant un moyen d'étanchéité annulaire (5) pour réaliser un joint étanche avec un tube inséré (3) et un élément de prise sensiblement annulaire (10) ayant une pluralité de dents (10b) qui agrippent le tube inséré et empêchent le retrait accidentel, ou l'expulsion, du tube (3) pendant le service, les diamètres intérieurs respectifs du moyen d'étanchéité (5) et de l'élément de prise (10) sont, avant d'effectuer l'accouplement avec un tube (3), sensiblement égaux ou supérieurs au diamètre extérieur du tube pour lequel ledit dispositif est normalement adapté, le dispositif comprenant en outre un moyen de serrage (8) mobile axialement par rapport au corps (1) entre une position axialement extérieure d'insertion de tube et une position axialement intérieure d'accouplement de tube et, lorsque le moyen de serrage est dans la position d'accouplement de tube, le moyen d'étanchéité (5) et les dents (10b) de l'élément de prise (10) sont déformés élastiquement, respectivement, en contact d'étanchéité et de prise avec la surface extérieure du tube inséré (3) tout en leur permettant de reprendre leurs positions d'insertion de tube lorsque le moyen de serrage est déplacé dans sa position axialement extérieure, dans lequel le moyen de serrage (8) comprend un écrou engagé par vissage avec le corps (1) ayant, à l'intérieur du corps, une face annulaire (9) qui, dans sa position axialement intérieure, charge directement ou indirectement le moyen d'étanchéité (5) et l'élément de prise (10), les déformant ainsi, respectivement, en contact d'étanchéité et de prise avec le tube (3), moyennant quoi l'écrou peut être déplacé entre ses positions axialement extérieure et intérieure en le faisant tourner, **caractérisé en ce que** des moyens de verrouillage (11) sont prévus pour empêcher ou inhiber le desserrage du moyen de serrage (8) lorsqu'il est dans sa position axialement intérieure d'accouplement de tube, et dans lequel lesdits moyens de verrouillage comprennent un cliquet (11) formé d'une seule pièce avec l'écrou et conçu pour s'engager dans un évidement (12) formé dans la face d'extrémité du corps (1) lorsque l'écrou a été correctement serré et lorsqu'ainsi le moyen de serrage (8) est dans la position d'accouplement de tube.

2. Dispositif d'accouplement de tube selon la revendication 1, dans lequel les diamètres intérieurs respectifs du moyen d'étanchéité (5) et de l'élément de prise (10) sont, lorsque le moyen de serrage (8) est dans sa position extérieure, supérieurs au diamètre extérieur du tube (3) de sorte que, lorsque le tube est inséré, il y a un jeu entre eux et le tube (3).
